**Europäisches Patentamt**

**European Patent Office**

**Office européen des brevets**

(11) Veröffentlichungsnummer: **0 122 973**
**B1**

(12) **EUROPÄISCHE PATENTSCHRIFT**

(45) Veröffentlichungstag der Patentschrift:
**24.06.87**

(21) Anmeldenummer: **83112817.8**

(22) Anmeldetag: **20.12.83**

(51) Int. Cl.⁴: **F 16 K 11/10**

(54) **Mischerventil.**

(30) Priorität: **11.04.83 DE 3312889**

(43) Veröffentlichungstag der Anmeldung:
**31.10.84 Patentblatt 84/44**

(45) Bekanntmachung des Hinweises auf die Patenterteilung:
**24.06.87 Patentblatt 87/26**

(84) Benannte Vertragsstaaten:
**AT CH FR GB IT LI NL SE**

(56) Entgegenhaltungen:
**EP - A - 0 008 757**
**DE - A - 2 205 486**
**DE - C - 111 255**
**GB - A - 1 462 765**
**US - A - 2 893 429**

(73) Patentinhaber: **VDO Adolf Schindling AG,**
**Gräfstrasse 103, D-6000 Frankfurt/Main (DE)**

(72) Erfinder: **Hoppe, Helmut, Schulstrasse 20,**
**D-6440 Bebra/Weiterode (DE)**

(74) Vertreter: **Könekamp, Herbert, Dipl.-Ing., Sodener**
**Strasse 9, D-6231 Schwalbach (DE)**

ACTORUM AG

## Beschreibung

Die Erfindung bezieht sich auf ein Mischventil mit einem einen Warmwassereinlassanschluss, einen Kaltwassereinlassanschluss und einen Mischwasserauslassanschluss aufweisenden Gehäuse, einer Einrichtung zum Voreinstellen der in einer Mischkammer einströmenden Wassermenge und mit einem Stromventil zum Einstellen der durch den Mischwasserauslassanschluss ausströmenden Wassermenge, wobei koaxial aus dem Gehäuse ein Mengeneinstellschaft des Stromventils und eine Temperatureinstellhülse herausgeführt sind, und die Temperatureinstellhülse mit einer zwei stirnseitige Steuernieren aufweisenden Steuerscheibe versehen ist, mit der sie auf zwei Wassereinlassöffnungen aufsitzt.

Ein derartiges Mischventil für Wasserarmaturen im häuslichen Bereich ist aus der GB-A1 462 765 bekannt. Dabei ist der Mengeneinstellschaft mit engem Spiel in der Temperatureinstellhülse und diese wiederum mit engem Spiel durch eine Gehäusebohrung aus dem Gehäuse herausgeführt. Dies erfordert eine Herstellung mit hoher Präzision. Damit ist eine Herstellung des Mischventils aus Kunststoff nicht möglich. Weiterhin ist ein derartiges Mischventil gegenüber harten Stössen, wie sie beispielsweise während der Fahrt eines Wohnwagens erfolgen und gegen Verunreinigungen des durch das Mischventil strömenden Wassers empfindlich.

Der Erfindung liegt daher die Aufgabe zugrunde, ein Mischventil der eingangs genannten Art so zu gestalten, dass es billig herstellbar ist, trotzdem jedoch unter allen im Freizeitbereich auftretenden Betriebsbedingungen einwandfrei arbeitet.

Diese Aufgabe wird erfindungsgemäss durch die im Anspruch 1 angegebenen Massnahmen gelöst.

Dadurch, dass sich die Temperatureinstellhülse und der Mengeneinstellschaft nicht gegenseitig abstützen, können sich sowohl das Stromventil in seinem Ventilgehäuse als auch die Steuerscheibe auf der Wassereinlassöffnung unabhängig voneinander zentrieren, so dass ein gegenseitiges Verspannen und damit die Gefahr eines Verklemmens ausgeschlossen ist. Das grosse Spiel zwischen Temperatureinstellhülse und Mengeneinstellschaft sowie zwischen der Temperatureinstellhülse und dem Gehäuse des Mischventils stellt sicher, dass auch bei einem Quellen des Kunststoffes, aus dem diese Bauteile vorzugsweise bestehen, es nicht zu einem Verklemmen kommt.

Konstruktiv besonders einfach ist die im Anspruch 2 angegebene Ausführungsform der Erfindung. Durch die schräg verlaufende Steuernut mit dem Dichtring wird es möglich, durch eine 180°-Drehung des Mengeneinstellschaftes und damit des Drehschiebers das Mischventil aus seiner geschlossenen Stellung in die vollständige geöffnete Stellung zu bringen. Die beiden Dichtringe, welche zur Abdichtung des Drehschiebers erforderlich sind, können gleichen Aussendurchmesser aufweisen, so dass der Drehschieber druckausgeglichen ist und keine Tendenz hat beispielsweise nach oben zu wandern.

Vorteilhaft ist es auch, wenn zwei im Querschnitt kreissegmentförmige Drehschiebereinlassöffnungen vorgesehen sind, welche durch einen Steg voneinander getrennt sind. Durch diese Gestaltung der beiden Schiebereinlassöffnungen wird verhindert, dass infolge eines zu grossen freien Querschnittes der Dichtring in der Steuernut relativ weit in die Einlassöffnungen gelangen kann und bei Drehschieberbetätigung von den Kanten der Einlassöffnungen beschädigt wird. Hiervon abgesehen mindert auch der schräge Verlauf des Dichtringes in der schrägen Nut den Verschleiss des Dichtringes.

Der Drehschieber kann sich völlig frei im Drehschiebergehäuse zentrieren, wenn der Aufbau des Mischventils wie im Anspruch 4 angegeben erfolgt. Es kann zu keinem Verklemmen infolge statischer Überbestimmtheit kommen.

Die Montage des Drehschiebers mit dem Mengeneinstellschaft ist besonders einfach durchzuführen, wenn der Drehschieber an seinem freien Ende einen quer verlaufenden Schlitz hat, und mit seinem radialen umlaufenden Vorsprung in eine umlaufende Nut im Drehschiebergehäuse eingeclipst ist. Der Drehschieber braucht dann lediglich von oben in das Drehschiebergehäuse eingeschoben zu werden, bis sein radialer umlaufender Vorsprung einclipst.

Durch die im Anspruch 6 angegebenen Merkmale kann die Steuerscheibe sich exakt entsprechend der Lage der Wassereinlassöffnungen ausrichten, so dass Fertigungstoleranzen ausgeglichen werden.

Durch die im Anspruch 7 angegebenen Merkmale wird erreicht, dass das in die Steuernieren strömende Wasser ausserhalb des Bereiches der Dichthülsen aus den Steuernieren frei herausströmen kann. Es sind deshalb keine Strömungskanäle in der Steuerscheibe erforderlich.

Durch die im Anspruch 8 angegebenen Merkmale lässt sich mit geringem Aufwand erreichen, dass die ausströmende Wassermenge unabhängig von der Drehstellung der Steuerscheibe konstant ist, da mit einer Verdrehung der Steuerscheibe die Kaltwassermenge sich im gleichen Masse beispielsweise vermindert, wie sich die Warmwassermenge erhöht. Es ist deshalb eine lineare Regelung der Wassertemperatur möglich.

Da in Mittelstellung der Steuerscheibe aus jeder Steuerniere Wasser nach zwei Seiten abströmen kann, würde bei konstanter Breite der Steuernieren sich dort der Ausströmquerschnitt verdoppeln. Damit die Wassermenge jedoch stets konstant bleibt ist es vorteilhaft, die Breite der Steuernieren zur Mitte hin geringer auszuführen als an ihren Enden, wie das im Anspruch 9 angegeben ist.

Vorteilhaft ist es auch, wenn am Mengeneinstellschaft ein Schaltnocken vorgesehen ist, gegen den ein Stössel eines Mikroschalters zum Ansteuern einer Wasserpumpe anliegt. Diese Ausgestaltung ist erforderlich, wenn kein Druckwasser zur Verfügung steht. Am Mengeneinstellschaft wird über den Mikroschalter zunächst eine Pumpe zum Fördern des Wassers und anschliessend das Stromventil betätigt. Bei geschlossenem Mischventil wird die Pumpe zwangsläufig abgeschaltet, so dass das System drucklos bleibt.

Zur Vereinfachung der Montage tragen die im Anspruch 11 angegebenen Merkmale bei. Die Clipse können einfach so bemessen sein, dass in verclipster Stellung die Druckfeder mit genau der richtigen Kraft auf die Steuerscheibe drückt.

Eine besonders einfache Befestigung des Mischventils in Einbauplatten unterschiedlicher Dicke ist durch die im Anspruch 12 angegebenen Merkmale möglich.

Die Erfindung lässt zahlreiche Ausführungsmöglichkeiten zu. Eine davon ist in der Zeichnung dargestellt und wird nachfolgend beschrieben. Es zeigen

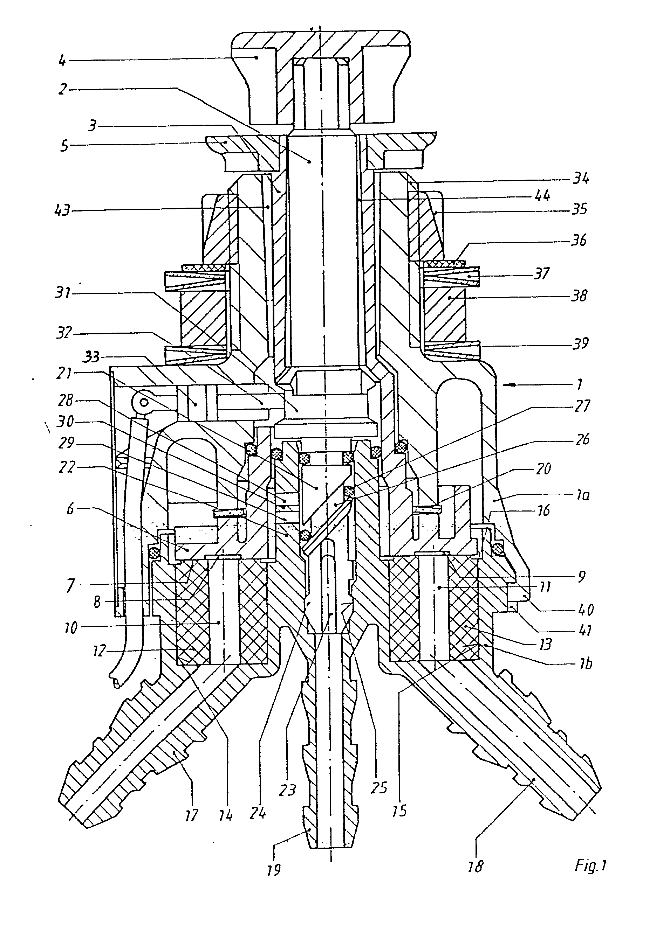

Figur 1 einen Längsschnitt durch ein erfindungsgemäss gestaltetes Mischventil,

Figur 2 eine schematische Querschnittsdarstellung des Mischventils im Bereich seiner Steuerscheibe,

Figur 3 eine Abwicklung der Mantelfläche eines Drehschiebers des Mischventils mit einer Darstellung der Drehschiebereinlassöffnungen.

Das erfindungsgemässe Mischventil hat ein Gehäuse 1, welches aus einem Gehäuseoberteil 1a und einem Gehäuseunterteil 1b besteht. Aus dem Gehäuseoberteil 1a ragen nach oben ein Mengeneinstellschaft 2 und koaxial dazu eine Temperatureinstellhülse 3 heraus. Auf dem freien Ende des Mengeneinstellschaft 2 sitzt ein Drehknopf 4, mit dem durch Drehung die Menge des aus dem Mischventil ausströmenden Wassers einstellbar ist. Ebenso sitzt auf der Temperatureinstellhülse 3 ein Mischrad 5, mit dem die Temperatur des ausfliessenden Wassers vorgewählt werden kann. Beide Einstellungen sind voneinander unabhängig, dass heisst, eine einmal eingestellte Wassertemperatur bleibt unabhängig von der Betätigung des Drehknopfes 4 erhalten.

Die Temperatureinstellhülse 3 hat im Inneren des Gehäuses 1 eine flanschartige Steuerscheibe 6 mit einer nach unten weisenden Steuerfläche 7. In der Steuerfläche 7 sind zwei Steuernieren 8, 9 vorgesehen. Diese Steuernieren 8, 9 sind je nach Drehposition der Steuerscheibe 6 mehr oder minder weit über zwei Wassereinlassöffnungen 10, 11 zu bewegen. Beide Wassereinlassöffnungen 10, 11 sind in Dichthülsen 12, 13 vorgesehen, die in Sackbohrungen 14, 15 des Gehäuseunterteils 1b eingesetzt sind. Die Dichthülsen 12, 13 sind bezüglich ihrer Höhe so bemessen, dass sie geringfügig aus einer Ringfläche 16 des Gehäuseunterteils 1b herausragen, in der die Sackbohrungen 14, 15 vorgesehen sind. Kaltwasser vermag durch die Dichthülse 12 zur Wassereinlassöffnung 10 über einen Kaltwassereinlassanschluss 17 und Warmwasser über einen Warmwassereinlassanschluss 18 durch die Dichthülse 13 zur Wassereinlassöffnung 11 zu strömen. Das Mischwasser verlässt das Mischventil über einen koaxialen Mischwasserauslassanschluss 19 zwischen dem Kaltwassereinlassanschluss 17 und dem Warmwassereinlassanschluss 18.

Im Inneren des Gehäuseoberteils 1a ist die Steuerscheibe 6 mittels einer als Federscheibe ausgebildeten Druckfeder 20 am Gehäuseoberteil 1a abgestützt, so dass sie mit einer genau definierten Vorspannung auf den Dichthülsen 12, 13 aufsitzt.

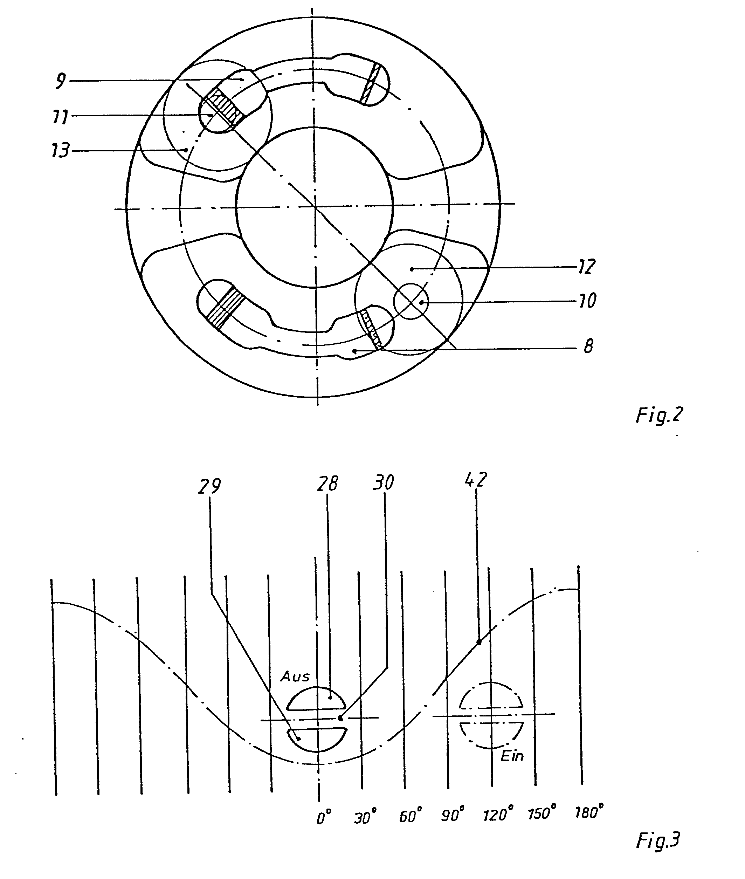

Zur Steuerung der ausfliessenden Wassermenge ist am Mengeneinstellschaft 2 ein Drehschieber 21 koaxial angeformt. Dieser Drehschieber 21 sitzt in einem Drehschiebergehäuse 22, welches durch einen nach oben offenen zylindrischen Fortsatz des Gehäuseunterteils 1b gebildet ist. Der Drehschieber 21 hat an seinem unteren Ende einen quer verlaufenden Schlitz 23 und einen radial nach aussen gerichteten umlaufenden Vorsprung 24, mit dem er in eine entsprechende Nut 25 des Drehschiebergehäuses 22 eingeclipst ist. Auf diese Weise ist zugleich der Mengeneinstellschaft 2 im Gehäuse 1 gehalten. Zur Steuerung der ausfliessenden Mischwassermenge hat der Drehschieber 21 eine umlaufende schräge Nut 26, in der mit axialem Spiel ein Dichtring 27 sitzt. Durch Drehung des Drehschiebers 21 gelangt der Dichtring 27 aus der dargestellten Position mehr oder minder weit über zwei Drehschiebereinlassöffnungen 28, 29 in dem Drehschiebergehäuse 22, so dass eine mehr oder minder grosse Wassermenge in das Drehschiebergehäuse 22 unterhalb des Dichtringes 27 und von dort zum Mischwasserauslassanschluss 19 fliessen kann. Die Drehschiebereinlassöffnungen 28, 29 sind beide im Querschnitt kreissegmentförmig ausgebildet, was Figur 3 zeigt, und nur durch einen schmalen Steg 30 voneinander getrennt.

Oberhalb des Drehschiebers 21 ist an dem Mengeneinstellschaft 2 ein Schaltnocken 31 vorgesehen, gegen den ein Stössel 32 eines Mikroschalters 33 anliegt. Dreht man am Drehknopf 4, so wird durch Drehung des Mengeneinstellschaft 2 der Stössel 32 verschoben und damit der Mikroschalter 33 betätigt, was zum Einschalten einer Wasserpumpe führt, durch die Wasser zum Mischventil gefördert wird.

Um das Mischventil in eine Bohrung einer Einbauplatte festschrauben zu können, hat das Gehäuseoberteil 1a an seinem oberen Ende ein Aussengewinde, auf das eine Mutter 35 geschraubt ist. Unterhalb der Mutter 35 ist eine Abdeckscheibe 36 vorgesehen, die ihrerseits auf einer Federscheibe 37 aufliegt. Unterhalb der Federscheibe 37 befindet sich eine Hülse 38 und darunter eine weitere Federscheibe 39. Die Federscheiben 37, 39 dienen zum Ausgleich unterschiedlicher Dikken von Einbauplatten.

Zur Montage werden in das Gehäuseunterteil 1b von oben her der Mengeneinstellschaft 2 mit seinem Drehschieber 21 und die Temperatureinstellhülse 3 mit der Steuerscheibe 6 eingesetzt.

Dann wird das Gehäuseoberteil 1a über das Gehäuseunterteil 1b geschoben, bis es mit Clipsen 40 in Rastvertiefungen 41 des Gehäuseunterteils 1b einzurasten vermag.

Für die zuverlässige Funktion des Mischventils ist wichtig, dass zwischen dem Gehäuseoberteil 1a und der Temperatureinstellhülse 3 und zwischen der Temperatureinstellhülse 3 und dem Mengeneinstellschaft 2 beträchtliches Spiel 43 und 44 vorhanden ist, damit es auch bei einem Quellen der Teile nicht zu einem Klemmen kommen kann.

Die Funktionsweise des erfindungsgemässen Mischventils ist wie folgt. Über den Warmwassereinlassanschluss 18 gelangt Warmwasser in die Steuerniere 9 und über den Kaltwassereinlassanschluss 17 Kaltwasser in die Steuerniere 8. Ausserhalb der Dichthülsen 12 und 13 gelangt das Wasser aus den Steuernieren 8, 9 heraus, vermischt sich im Gehäuseoberteil 1a und strömt durch die Drehschiebereinlassöffnungen 28, 29 an dem Dichtring 27 vorbei zum Mischwasserauslassanschluss 19. Dreht man am Drehknopf 4, so wandert der Dichtring 27 an den Drehschiebereinlassöffnungen 28, 29 je nach Drehsinn nach oben oder unten, so dass mehr oder weniger Wasser zum Mischwasserauslassanschluss 19 fliesst.

Die Temperatur des ausströmenden Wassers ist durch Drehen am Mischerrad 5 veränderbar. Die Funktionsweise dieser Verstellmöglichkeit ist am leichtesten unter Einbeziehung der Figur 2 zu erkennen. In der dort dargestellten Position der Steuerscheibe 6 strömt Warmwasser durch die Wassereinlassöffnung 11 in die Steuerniere 9 und ausserhalb der Dichthülse 13 aus der Steuerniere 9 heraus in das Mischventil. Die Wassereinlassöffnung 10 ist durch die Steuerscheibe 6 vollständig abgedeckt, so dass kein Kaltwasser einströmen kann. In den Steuernieren 8, 9 sind jeweils an zwei Stellen schraffiert die Querschnittstiefen eingezeichnet. Man erkennt, dass die Steuerniere 9 in dem die Wassereinlassöffnung 11 überdeckenden Bereich maximalen Querschnitt hat. Zur Mitte hin sind beide Steuernieren 8, 9 in ihrer Breite auf die Hälfte verringert. Dreht man die Steuerscheibe 6 entgegen dem Uhrzeigersinn, so nimmt der Querschnitt der Steuerniere 9, der sich über der Wassereinlassöffnung 11 befindet, langsam ab. Dafür gelangt die Steuerniere 8 mit zunehmendem Querschnitt über die Wassereinlassöffnung 10. Die Folge ist, dass die Summe der Wassermengen, welche aus den Wassereinlassöffnungen 10, 11 fliessen, stets konstant ist.

Figur 3 zeigt, wie durch Verdrehen des Mengeneinstellschaftes 2 und damit des Drehschiebers 21 eine Berührungslinie 42 des Dichtringes 27 sich entlang der Drehschiebereinlassöffnungen 28, 29 verlagert. Man erkennt, dass durch eine 180 Grad Drehung des Drehschiebers 21 die Berührungslinie 42 aus einer Position unterhalb der Drehschiebereinlassöffnung 29 bis oberhalb der Drehschiebereinlassöffnung 28 wandert, so dass das Mischventil durch eine 180 Grad Drehung am Drehknopf 4 aus seiner Schliessstellung in eine maximale Offenstellung gebracht werden kann.

## Patentansprüche

1. Mischventil mit einem einen Wassereinlassanschluss (18), einen Kaltwasseranschluss (17) und einen Mischwasserauslassanschluss (19) aufweisenden Gehäuse (1), einer Einrichtung zum Voreinstellen der in eine Mischkammer einströmenden Wassermenge und mit einem Stromventil (21) zum Einstellen der durch den Mischwasserauslassanschluss (19) ausströmenden Wassermenge, wobei koaxial aus dem Gehäuse (1) ein Mengeneinstellschaft (2) des Stromventils und eine Temperatureinstellhülse (3) herausgeführt sind, und die Temperatureinstellhülse (3) mit einer zwei stirnseitige Steuernieren (8, 9) aufweisenden Steuerscheibe (6) versehen ist, mit der sie auf zwei Wassereinlassöffnungen (10, 11) aufsitzt, dadurch gekennzeichnet, dass der Mengeneinstellschaft (2) und die Temperatureinstellhülse (3) mit einem ein gegenseitiges Abstützen vermeidenden gegenseitigen Spiel und Spiel zum Gehäuse (1) aus diesem herausgeführt sind.

2. Mischventil nach Anspruch 1, dadurch gekennzeichnet, dass das Stromventil durch einen am Mengeneinstellschaft (2) angeformten Drehschieber (21) gebildet ist, der eine schräg verlaufende Steuernut (26) mit einem Dichtring (27) hat, welcher je nach Drehstellung mehr oder weniger in Überdeckung mit Drehschiebereinlassöffnungen (28, 29) zu bringen ist.

3. Mischventil nach Anspruch 1 oder einem der folgenden, dadurch gekennzeichnet, dass zwei im Querschnitt kreissegmentförmige Drehschiebereinlassöffnungen (28, 29) vorgesehen sind, welche durch einen Steg (30) voneinander getrennt sind.

4. Mischventil nach Anspruch 1 oder einem der folgenden, dadurch gekennzeichnet, dass der Drehschieber (21) in einem einstückig mit dem Gehäuse (1) ausgebildeten Drehschiebergehäuse (22) und der Mengeneinstellschaft (2) ausschliesslich über den Drehschieber (21) fliegend gelagert ist.

5. Mischventil nach Anspruch 1 oder einem der folgenden, dadurch gekennzeichnet, dass der Drehschieber (21) an seinem freien Ende einen quer verlaufenden Schlitz (23) hat, und mit einem radialen umlaufenden Vorsprung (24) in eine umlaufende Nut (25) im Drehschiebergehäuse (22) eingeclipst ist.

6. Mischventil nach Anspruch 1 oder einem der folgenden, dadurch gekennzeichnet, dass die Steuerscheibe (6) durch eine zwischen der Steuerscheibe (6) und dem Gehäuse (1) abgestützten Druckfeder (20) mit Vorspannung auf den Wassereinlassöffnungen (10, 11) gehalten ist.

7. Mischventil nach Anspruch 1 oder einem der folgenden, dadurch gekennzeichnet, dass die Wassereinlassöffnungen (10, 11) in jeweils einer Dichthülse (12, 13) vorgesehen sind, welche jeweils in einer gehäusefesten Sackbohrung (14, 15) sitzen und geringfügig über eine Ringfläche (16) hinausragen, in die sie münden.

8. Mischventil nach Anspruch 1 oder einem der folgenden, dadurch gekennzeichnet, dass der freie Querschnitt der einen Steuerniere (8) über ihre Länge im Uhrzeigersinn gesehen zunimmt und der Querschnitt der anderen Steuerniere (9) entsprechend über ihre Länge im Uhrzeigersinn gesehen abnimmt.

9. Mischventil nach Anspruch 1 oder einem der folgenden, dadurch gekennzeichnet, dass die Tiefe der einen Steuerniere (8) über ihre Länge zunimmt und die der anderen Steuerniere (9) abnimmt, und dass beide Steuernieren (8, 9) zur Mitte hin schmaler sind als an ihren Enden.

10. Mischventil nach Anspruch 1 oder einem der folgenden, dadurch gekennzeichnet, dass am Mengeneinstellschaft (2) ein Schaltnocken (31) vorgesehen ist, gegen den ein Stössel (32) eines Mikroschalters (33) zum Ansteuern einer Wasserpumpe anliegt.

11. Mischventil nach Anspruch 1 oder einem der folgenden, dadurch gekennzeichnet, dass das Gehäuse (1) aus einem alle Wasseranschlüsse (17, 18, 19), das Drehschiebergehäuse (22) und die Wassereinlassöffnungen (10, 11) aufweisenden Gehäuseunterteil (1b) und einem daran durch Clipse (40) befestigtem Gehäuseoberteil (1a) besteht.

12. Mischventil nach Anspruch 1 oder einem der folgenden, dadurch gekennzeichnet, dass das Gehäuseoberteil (1a) an seinem oberen Ende ein Aussengewinde (34) mit einer Mutter (35) zum Befestigen in einer Einbauplatte hat.

**Revendications**

1. Robinet mitigeur comprenant un boîtier (1) muni d'un raccord (18) d'admission d'eau chaude, d'un raccord (17) d'admission d'eau froide et d'un raccord (19) de sortie de l'eau mitigée, un dispositif pour régler par avance la quantité d'eau affluant dans une chambre de mitigeage, ainsi qu'une soupape d'écoulement (21) pour régler la quantité d'eau s'écoulant par le raccord (19) de sortie d'eau mitigée, une tige de réglage quantitatif (2) de la soupape d'écoulement et une douille de régulation thermique (3) sortant coaxialement du boîtier (1), ladite douille de régulation thermique (3) étant pourvue d'un disque de commande (6) percé frontalement de deux évidements réniformes de commande (8, 9), et par lequel elle repose sur deux orifices (10, 11) d'admission d'eau, robinet caractérisé par le fait que la tige de réglage quantitatif (2) et la douille de régulation thermique (3) sont munies d'un jeu mutuel les empêchant de prendre appui l'une sur l'autre, et sortent du boîtier (1) avec jeu par rapport à ce dernier.

2. Robinet mitigeur selon la revendications 1, caractérisé par le fait que la soupape d'écoulement est formée par une noix rotative (21) ménagée solidairement sur la tige de réglage quantitatif (2) et munie d'une gorge de commande (26) s'étendant à l'oblique et associée à une bague d'étanchement (27) qui, selon la position prise par rotation, peut être amenée à recouvrir plus ou moins des orifices (28, 29) d'admission dans la noix rotative.

3. Robinet mitigeur selon la revendication 1 ou l'une des suivantes, caractérisé par le fait que deux orifices (28, 29) d'admission dans la noix rotative, de section configurée en secteur circulaire, sont séparés l'un de l'autre par une membrure (30).

4. Robinet mitigeur selon la revendication 1 ou l'une des suivantes, caractérisé par le fait que la noix rotative (21) est montée flottante dans un carter (22) réalisé d'un seul tenant avec le boîtier (1), la tige de réglage quantitatif (2) étant montée flottante uniquement par l'intermédiaire de cette noix rotative (21).

5. Robinet mitigeur selon la revendication 1 ou l'une des suivantes, caractérisé par le fait que la noix rotative (21) présente à son extrémité libre une fente (23) s'étendant transversalement, et est enclipsée par une saillie périphérique radiale (24) dans une gorge périphérique (25) pratiquée dans le carter (22) de cette noix rotative.

6. Robinet mitigeur selon la revendication 1 ou l'une des suivantes, caractérisé par le fait que le disque de commande (6) est maintenu avec précharge sur les orifices (10, 11) d'admission d'eau, par l'intermédiaire d'un ressort de pression (20) prenant appui entre ce disque de commande (6) et le boîtier (1).

7. Robinet mitigeur selon la revendication 1 ou l'une des suivantes, caractérisé par le fait que les orifices (10, 11) d'admission d'eau sont prévus dans une douille respective d'étanchement (12, 13) qui repose à chaque fois dans un trou borgne (14, 15) ménagé dans le corps du boîtier, et dépasse légèrement au-delà d'une surface annulaire (16) dans laquelle elle débouche.

8. Robinet mitigeur selon la revendication 1 ou l'une des suivantes, caractérisé par le fait que la section libre de l'un (8) des évidements réniformes de commande augmente sur sa longueur observée dans le sens des aiguilles d'une montre, la section de l'autre évidement réniforme de commande (9) diminuant d'une manière correspondante sur sa longueur, observée dans le sens des aiguilles d'une montre.

9. Robinet mitigeur selon la revendication 1 ou l'une des suivantes, caractérisé par le fait que la profondeur de l'un (8) des évidements réniformes de commande augmente sur sa longueur et celle de l'autre évidement réniforme de commande (9) décroît; et par le fait que les deux évidements réniformes de commande (8, 9) sont plus étroits vers le centre qu'à leurs extrémités.

10. Robinet mitigeur selon la revendication 1 ou l'une des suivantes, caractérisé par le fait qu'il est prévu sur la tige de réglage quantitatif (2), une came d'enclenchement (31) contre laquelle s'applique le coulisseau (32) d'un micro-interrupteur (33) destiné à la commande d'une pompe à eau.

11. Robinet mitigeur selon la revendication 1 ou l'une des suivantes, caractérisé par le fait que le boîtier (1) se compose d'une partie inférieure (1b) présentant tous les raccords à eau (17, 18, 19), le carter (22) de la noix rotative et les orifices (10, 11) d'admission d'eau, ainsi que d'une partie supérieure (1a) fixée à ladite partie inférieure par l'intermédiaire de clips (40).

12. Robinet mitigeur selon la revendication 1 ou l'une des suivantes, caractérisé par le fait que la partie supérieure (1a) du boîtier comporte, à son extrémité supérieure, un filetage externe (34) associé à un écrou (35) en vue de la fixation dans une plaque d'incorporation.

## Claims

1. Mixing valve, with a housing (1) comprising a water inlet connection (18), a cold water connection (17) and a mixed water outlet connection (19), with a device for preadjusting the quantity of water flowing into a mixing chamber, and with a flow control valve (21) for adjusting the quantity of water flowing out through the mixed water outlet connection (19), a quantity adjustment shank (2) of the flow control valve and a temperature adjustment sleeve (3) being taken coaxially out of the housing (1), and the temperature adjustment sleeve (3) is provided with a control disc (6) which has two facial kidney-shaped control apertures (8, 9) and with which it rests on two water inlet ports (10, 11), characterised in that the quantity adjustment shank (2) and the temperature adjustment sleeve (3) extend out of the housing (1) with clearance therefrom and with clearance from one another which obviates bearing against each other.

2. Mixing valve according to claim 1, characterised in that the flow control valve is formed of a rotary slide valve (21) which is formed on the quantity adjustment shank (2) and which has an obliquely disposed control groove (26) with a sealing ring (27) which is to be brought to cover rotary slide valve inlet ports (28, 29) to a greater or lesser degree depending on the rotational position.

3. Mixing valve according to claim 1 or one of the following, characterised in that two rotary slide valve inlet ports (28, 29) in the form of segments of circles in cross-section are provided which are separated from one another by a web (30).

4. Mixing valve according to claim 1 or one of the following, characterised in that the rotary slide valve (21) is mounted in a rotary slide valve housing (22) constructed in one piece with the housing (1), and the quantity adjustment shank (2) is mounted in overhung manner solely by means of the rotary slide valve (21).

5. Mixing valve according to claim 1 or one of the following, characterised in that the rotary slide valve (21) has at its free end a transversely disposed slot (23), and is clipped with a radial encircling projection (24) into an encircling groove (25) in the rotary slide valve housing (22).

6. Mixing valve according to claim 1 or one of the following, characterised in that the control disc (6) is held with preload on the water inlet ports (10, 11) by a compression spring (20) supported between the control disc (6) and the housing (1).

7. Mixing valve according to claim 1 or one of the following, characterised in that the water inlet ports (10, 11) are each provided in a sealing sleeve (12, 13) which are each arranged in a blind hole (14, 15) integral with the housing and project slightly above an annular surface (16) into which they open.

8. Mixing valve according to claim 1 or one of the following, characterised in that the free cross-section of one of the kidney-shaped control apertures (8) increases over its length as viewed in the clockwise direction, and the cross-section of the other kidney-shaped control aperture (9) decreases correspondingly over its length as viewed in the clockwise direction.

9. Mixing valve according to claim 1 or one of the following, characterised in that the depth of one kidney-shaped control aperture (8) increases over its length and the depth of the other kidney-shaped control aperture (9) decreases, and that both kidney-shaped control apertures (8, 9) are narrower towards the middle than at their ends.

10. Mixing valve according to claim 1 or one of the following, characterised in that there is provided on the quantity adjustment shank (2) a switch cam (31) against which a plunger (32) of a microswitch (33) abuts for operating a water pump.

11. Mixing valve according to claim 1 or one of the following, characterised in that the housing (1) consists of a lower housing part (1b) comprising all the water connections (17, 18, 19), the rotary slide valve housing (22), and the water inlet ports (10, 11), and of an upper housing part (1a) secured to the said lower housing part by clips (40).

12. Mixing valve according to claim 1 or one of the following, characterised in that the upper housing part (1a) at its upper end has an external screwthread (34) with a nut (35) for securing in a mounting panel or plate.

Fig.1

Fig.2

Fig.3